(19) **Europäisches Patentamt**

**European Patent Office**

**Office européen des brevets**

(11) Veröffentlichungsnummer: **0 123 782**
A2

## (12) EUROPÄISCHE PATENTANMELDUNG

(21) Anmeldenummer: **84100356.9**

(22) Anmeldetag: **14.01.84**

(51) Int. Cl.³: **B 01 D 53/04**, B 01 D 53/26

(30) Priorität: **29.04.83 DE 3315580**

(43) Veröffentlichungstag der Anmeldung: **07.11.84**
Patentblatt 84/45

(84) Benannte Vertragsstaaten: **DE FR GB IT SE**

(71) Anmelder: **WABCO Westinghouse Fahrzeugbremsen GmbH, Am Lindener Hafen 21 Postfach 91 12 80, D-3000 Hannover 91 (DE)**

(72) Erfinder: **Vanselow, Jörg, Am Rehrkamp 20, D-3003 Ronnenberg 4 (DE)**

(74) Vertreter: **Schrödter, Manfred, WABCO Westinghouse Fahrzeugbremsen GmbH Am Lindener Hafen 21 Postfach 91 12 80, D-3000 Hannover 91 (DE)**

(54) Einrichtung zum Entziehen von Bestandteilen aus Gas- und/oder Dampfgemischen.

(57) Die Erfindung betrifft eine Einrichtung zum Entziehen von Bestandteilen aus Gas- und/oder Dampfgemischen und/oder zum Entziehen von Flüssigkeitstropfen und/oder Feststoffen aus derartigen Gemischen mit körnigen festen Adsorptions- oder Absorptionsmitteln. Es wird vorgeschlagen, durch Anordnung der Adsorptions- oder Absorptionsmittel in wenigstens einem geschlossenen Beutel den Austritt dieser Mittel zu verhindern und sie zu fixieren.

Hannover, den 14.4.1983

WP 14/83 Ehr/Gb

Einrichtung zum Entziehen von Bestandteilen aus Gas- und/oder

Dampfgemischen

Die Erfindung betrifft eine Einrichtung zum Entziehen von Bestandteilen aus Gas- und/oder Dampfgemischen gemäß dem Oberbegriff des
Anspruches 1.

Einrichtungen, in denen mittels Adsorptions- oder Absorptionsmitteln Gas- und/oder Dampfgemischen bestimmte Bestandteile entzogen oder diese Gemische-beispielsweise von unerwünschten tropfenförmigen Flüssigkeitsanteilen und staubförmigen Feststoffen - gereinigt werden, werden z.B. als Lufttrockner in Druckluftanlagen
für Kraftfahrzeuge eingesetzt, da nicht entzogene Luftfeuchtigkeit in den Bauteilen der Anlagen Korrosion und folglich Funktionsstörungen hervorrufen würde.

Aus der DE-PS 17 28 507 ist eine Einrichtung der gattungsgemäßen
Art bekannt. Dabei handelt es sich um eine mit einem regenerierbaren Adsorptionsmittel arbeitende Trocknungseinrichtung für Druckluft. Zur Regeneration des Adsorptionsmittels wird die Einrichtung druckentlastet und ein Teil der zuvor unter Druck getrockneten Luftmenge im entspannten Zustand durch das Adsorptionsmittel zurückgeleitet, wodurch demselben die aufgenommene Luftfeuchtigkeit wieder entzogen wird. Die Druckentlastung erfolgt teilweise schlagartig. Dadurch wird ein dem Adsorptionsmittel vorgeschalteter Ölabscheider getrocknet. Infolge der sich ständig wiederholenden Druckwechsel neigen die Partikel des Adsorptionsmittels dazu, aneinander zu scheuern, wodurch Abrieb entsteht, der die Funktion der Einrichtung stören und auch vom durchgeleiteten Luftstrom mitgerissen werden kann. Die Gefahr der Abriebbildung wird unter bestimmten Einsatzbedingungen, beispielsweise in Kraftfahrzeugen, durch Schwingungen der Trocknungseinrichtung insgesamt und dadurch angeregte Vibrationen der Adsorptionsmittelpartikel gegeneinander noch vergrößert. Zur Vermeidung dieser nachteiligen Erscheinungen ist in der DE-PS 17 28 507 das Adsorptionsmittel im Gehäuse der Einrichtung zwischen zwei porösen, gegeneinander durch eine Feder verspannten und durch Stützplatten, z.B. aus perforiertem Stahl- blech, verstärkten Filterpolstern aus Polyurethanschaum fixiert. Trotz dieser Maßnahme kann es vorkommen, daß Abrieb des Adsorptionsmittels in den durchgeleiteten Luftstrom übertritt, dies insbesondere dann, wenn sich infolge Verformung oder Abnutzung der Filterpolster zwischen denselben und der Gehäusewand Undichtigkeiten gebildet haben. Es ist denkbar, zur Beseitigung dieser Gefahr eine Abdichtung zwischen Adsorptionsmittelkammer und Gasraum mittels handelsüblicher Dichtmittel, etwa O-Ringe, vorzusehen. Das wäre jedoch eine aufwendige Lösung, da zusätzliche Bauteile zur Aufnahme und Führung dieser Dichtmittel sowie zur Herstellung der erforderlichen Dichtkraft benötigt würden. Nachteilig wäre auch , daß ein Teil der Federkraft von den durch das oder die Dichtmittel hervorgerufenen Reibkräften aufgenommen würde.

Der Erfindung liegt die Aufgabe zugrunde, bei einer gattungsgemäßen Einrichtung den Austritt von Adsorptions- oder Absorptionsmitteln aus dem Gehäuse oder dem dafür vorgesehenen Gehäuseteil zuverlässig und mit einfachen Mitteln zu verhindern sowie die Adsorptions- oder Absorptionsmittel mit einfachen Mitteln räumlich zu fixieren.

Diese Aufgabe wird durch die im Anspruch 1 aufgeführte Erfindung gelöst. Weiterbildungen und vorteilhafte Ausgestaltungen sind in den Unteransprüchen enthalten.

Die Erfindung hat den Vorteil, daß zusätzliche poröse Bauteile zur räumlichen Festlegung der Adsorptions- oder Absorptionsmittel entfallen können.

Weiterer Vorteil ist, daß in bestimmten Einsatzfällen, insbesondere beim Betrieb ohne Druckstöße und/oder ohne schädliche Auswirkungen von Schwingungen, auf zusätzliche Fixiermittel, beispielsweise eine Feder mit Stützplatte, verzichtet werden kann.

Vorteilhaft ist auch die vereinfachte und verbilligte Wartung. Die erfindungsgemäß portionsweise abgepackten Mittel lassen sich den gattungsgemäßen Einrichtungen einfach entnehmen und zuführen, Rückstände der Mittel treten in Gehäusen oder Kartuschen nicht auf. Etwa eingesetzte Patronen brauchen nicht komplett ersetzt zu werden, es genügt der Ersatz der darin enthaltenen abgepackten Adsorptions- oder Absorptionsmittelportion bzw. -portionen.

Vorteilhaft ist ferner, daß die erfindungsgemäß abgepackten Adsorptions- oder Absorptionsmittel in Einheitsmengen konfektioniert werden können. Die Füllmengen unterschiedlich großer Einrichtungen können dann aus der erforderlichen Anzahl Konfektionspackungen zusammengesetzt werden. Damit ergibt sich eine vereinfachte Beschaffung und Lagerhaltung.

Die Erfindung wird nachstehend anhand von Ausführungsbeispielen, die in den Zeichnungen dargestellt sind, näher erläutert:

- 4 -

0123782

Es zeigen

Fig. 1 einen senkrechten Schnitt durch ein erstes Ausführungsbeispiel einer erfindungsgemäßen Einrichtung,

Fig. 2 einen senkrechten Schnitt durch ein zweites Ausführungsbeispiel einer erfindungsgemäßen Einrichtung,

Fig. 3 Einzelheiten der Einrichtung nach Fig. 2 entlang Schnittlinie I - I,

Fig. 4 Einzelheiten der Einrichtung nach Fig. 2 entlang Schnittlinie II - II.

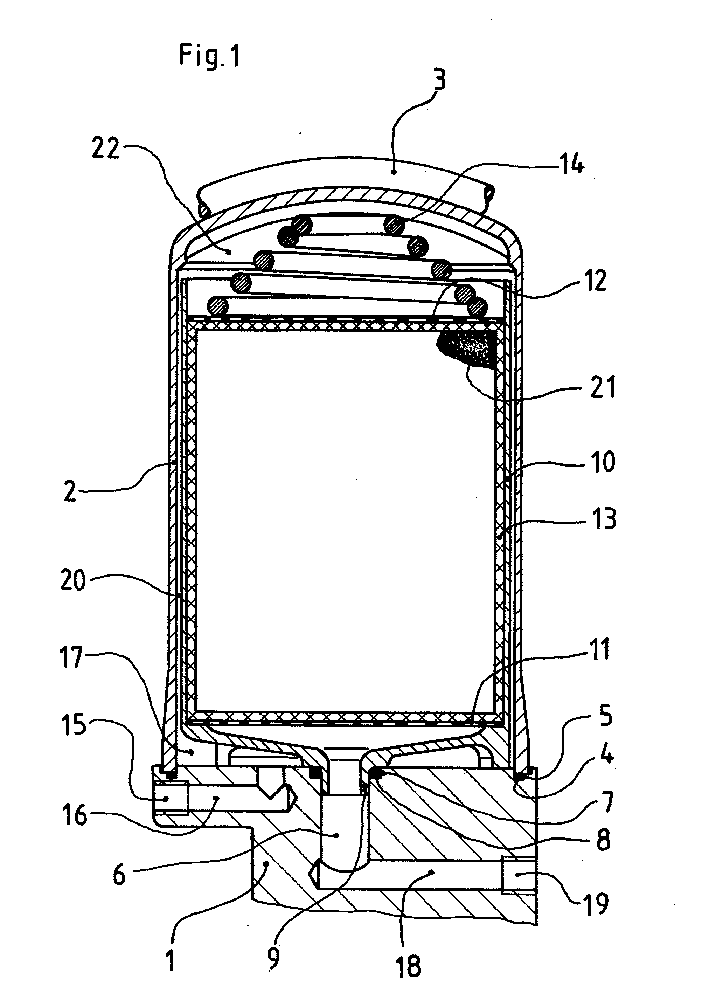

Bei der in Fig. 1 dargestellten Einrichtung handelt es sich um
einen Lufttrockner, insbesondere für eine Druckluftanlage für
Kraftfahrzeuge mit einem regenerierbaren körnigen festen Adsorptionsmittel. Das Gehäuse besteht aus dem Unterteil 1 und
dem Dom 2, welche über den Bügel 3 miteinander verbunden und
über die in dem Unterteil 1 angeordnete Ringnut 5 seitlich zueinander fixiert sind. Mittels des Dichtringes 4 ist das Gehäuse
abgedichtet. Konzentrisch zu der Ringnut 5 ist im Unterteil eine
Bohrung 6 mit einer stufenförmigen Erweiterung 7 zur Aufnahme
eines O-Ringes 8 angebracht. Im Dom ist eine über einen durchbrochenen Zapfen 9 im Unterteil 1 geführte, als herausnehmbare
Kartusche 10 ausgebildete Kammer angeordnet, in deren Innenraum,
auf einer Stützscheibe 11 aus perforiertem Stahlblech aufliegend,
ein geschlossener, für feuchte Luft durchlässiger Beutel 13,
beispielsweise aus einem filzartigen Textil, gefüllt mit dem
Adsorptionsmittel 21, untergebracht ist. Auf das in dem Beutel 13
eingeschlossene Adsorptionsmittel 21 drückt über eine weitere
Stützscheibe 12 aus perforiertem Stahlblech eine sich am Dom 2
abstützende Feder 14, die ausreichend bemessen ist, die Partikel
des Adsorptionsmittels gegen die im Betrieb infolge von Druckwechseln und Schwingungen auftretenden Beschleunigungen weitgehend
zu fixieren. Im Unterteil 1 sind ein Einlaß 15 sowie ein von diesem ausgehender Kanal 16 zum Gehäuseinnenraum 17, 20, 22 sowie ein über den Kanal 18 mit der Bohrung 6 verbundener Auslaß 19 vorgesehen. Der untere Teil 17 des Gehäuseinnenraumes und die mit dem Auslaß 19 verbundene Bohrung 6 sind bei eingesetzter Kartusche 10 durch den O-Ring 8 gegeneinander abgedichtet. Die nachstehend erwähnten, nicht dargestellten Einrichtungen: Druckregler, Vorabscheider und Steuereinrichtung für die Regeneration des Adsorptionsmittels können baulich mit dem Gehäuse vereinigt sein.

In der Förderphase tritt die von einem Kompressor geförderte feuchte Luft über einen Druckregler und einen Vorabscheider, in welchem sie weitgehend gereinigt und von groben Wassertropfen befreit wird, durch den Einlaß 15 und den Kanal 16 in den unteren Teil 17 des Gehäuseinnenraumes ein. Sie strömt von hier durch den von der Dominnenfläche und der Kartuschenaußenfläche gebildeten ringförmigen Teil 20 und den oberen Teil 22 des Innenraumes und durch das in der Kartusche 10 befindliche, von dem Beutel 13 eingeschlossene Adsorptionsmittel 21 in die Bohrung 6 und von dort durch den Kanal 18 und den Auslaß 19 über eine Steuereinrichtung für die Adsorptionsmittelregeneration zu den Vorratsbehältern der Druckluftanlage. Auf diesem Wege nehmen der Beutel 13 den wesentlichen Teil der in der Luft etwa noch enthaltenen festen Verunreinigungen sowie der etwa noch vorhandenen gröberen Wassertropfen und das Adsorptionsmittel 21 den Wassergehalt der Luft auf.

In der Regenerationsphase wird von der Steuereinrichtung, abhängig vom Druck in den Vorratsbehältern, der Gehäuseinnenraum 17, 20, 22 mit dem Innenraum der Kartusche 10 druckentlastet und ein durch entsprechende Einstellung oder Auslegung der Regenerationseinrichtung vorbestimmtes Volumen entspannter Luft aus den Vorratsbehältern in umgekehrter Richtung durch das Adsorbtionsmittel geleitet. Durch diese Luft werden das Adsorbtionsmittel 21 und der Beutel 13 getrocknet und ein Teil der vom Beutel aufgenommenen festen Verunreinigungen wieder mitgerissen.

Die Kartusche 10 und der Dom 2 können,beispielsweise durch Verschrauben oder Bördeln,baulich miteinander vereinigt werden, wodurch in Verbindung mit geeigneten Maßnahmen zum Anschluß an das Unterteil 1, etwa durch einen Schraubanschluß und eine Verlegung des Dichtrings 4,eine abnehmbare Patrone entsteht.

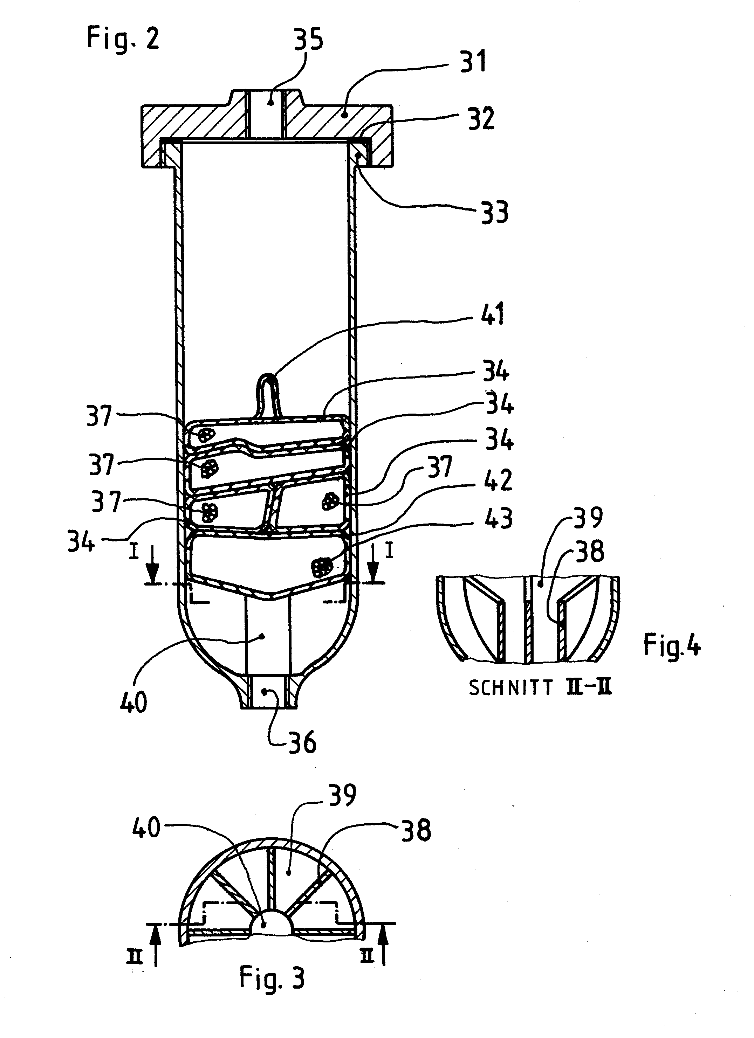

Fig. 2 zeigt eine Einrichtung, in der bei im wesentlichen Atmosphärendruck – lediglich zur Überwindung des Durchflußwiderstandes der Einrichtung ist ein gewisser Überdruck erforderlich – mittels in mehreren Beuteln eingeschlossener Absorptionsmittel Luft von Schadstoffen, wie sauren Gasen und Kohlenwasserstoffen,und Feststoffen, wie Staub, gereinigt wird. In diesem Ausführungsbeispiel bildet das aus den miteinander verschraubten Gehäuseteilen 31,33 bestehende und über die Dichtung 32 abgedichtete Gehäuse eine Kammer für die aus mehreren, jeweils in einem Beutel 34, 42 abgepackten Portionen 37, 43 zusammengesetzten Absorptionsmittel. Die Gesamtmenge der Absorptionsmittel besteht aus einer in einem größeren Beutel 42 abgepackten größeren Portion 43 und mehreren, jeweils in kleineren Beuteln 34 abgepackten kleineren Portionen 37. Die Portionen können aber auch von einheitlicher Größe in gleichmäßig großen geschlossenen Beuteln sein. Zur Erleichterung des Einsetzens und Heraushebens der Portionen ist jeder Beutel an seiner Außenfläche mit wenigstens einer Schlaufe 41 versehen, an deren Stelle auch andere Mittel, etwa Laschen, treten können. Die Rohluft strömt über den Einlaß 35 durch die von den Gehäuseteilen 31,33 gebildete Kammer und die darin angeordneten Absorptionsmittel sowie durch die im Boden des Gehäuseteils 33 angeordneten, zur Kammer hin offenen Kanäle 39 über den Durchbruch 40 zum Auslaß 36. Die erwähnten Kanäle 39 werden zwischen Rippen 38 des Bodens gebildet und münden in den Durchbruch 40. Die Absorptionsmittel in ihren Beuteln liegen auf den Rippenoberkanten auf. Der freie Querschnitt der Kanäle ist so bemessen, daß die zu reinigende Luft die Absorptionsmittel gleichmäßig über den Querschnitt der Kammer verteilt und ohne nennenswerte Erhöhung des Durchflußwiderstandes durchströmen kann.

Auf dem Weg durch die Einrichtung nach Fig. 2 lagern sich die Feststoffe aus der Rohluft an dem Beutelmaterial ab, während die gasförmigen Schadstoffe von den Absorptionsmitteln aufgenommen werden. Bei diesem Ausführungsbeispiel handelt es sich um eine stationäre Anlage, in der keine Druckwechsel und kaum Gehäuseschwingungen auftreten und darüber hinaus die Absorptionsmittel nach relativ kurzer Betriebszeit ausgetauscht werden, weshalb eine etwaige Abriebbildung nicht zur Auswirkung kommt. Deshalb reichen hier erfindungsgemäße Beutel zur räumlichen Fixierung der Absorptionsmittel aus. Solche Einrichtungen können beispielsweise paarig eingesetzt werden, so daß jederzeit eine Einrichtung betriebsbereit ist, während die andere zum Zwecke des Absorptionsmittelaustausches stillgesetzt ist.

Es ist ersichtlich, daß der Beutelwerkstoff keine nennenswerte Steifigkeit besitzen darf, damit er das möglichst vollständige Ausfüllen der die Adsorptions- oder Absorptionsmittel enthaltenden Gehäuse oder Gehäuseteile nicht behindert.

Die vorstehend an Einrichtungen zur Behandlung von Gemischen mit Luft beschriebene Erfindung ist auch in anderen gattungsgemäßen Einrichtungen anwendbar.

Patentansprüche

1. Einrichtung zum Entziehen von Bestandteilen aus Gas- und/oder Dampfgemischen und/oder zum Entziehen von Flüssigkeitstropfen und/oder Feststoffen aus derartigen Gemischen, insbesondere zur Lufttrocknung in Druckluftanlagen für Fahrzeuge, mit wenigstens einem von den genannten Gemischen durchströmten Gehäuse, welches von den genannten Gemischen ebenfalls durchströmte körnige feste Adsorptionsmittel oder Absorptionsmittel enthält, dadurch gekennzeichnet, daß die Adsorptionsmittel oder Absorptionsmittel in wenigstens einem für die durchströmenden Gas- und/oder Dampfgemische durchlässigen, geschlossenen Beutel (13,34,42) angeordnet sind.

2. Einrichtung nach Anspruch 1, dadurch gekennzeichnet, daß die Adsorptionsmittel oder Absorptionsmittel in einer einzigen Portion (21) in einem für die durchströmenden Gas- und/oder Dampf-Gemische durchlässigen geschlossenen Beutel (13) abgepackt sind.

3. Einrichtung nach Anspruch 1, dadurch gekennzeichnet, daß die Adsorptionsmittel oder Absorptionsmittel aus mehreren Portionen (37,43), von denen jede für sich in einem für die durchströmenden Gas- und/ oder Dampfgemische durchlässigen geschlossenen Beutel (34,42) abgepackt ist, zusammengesetzt sind.

4. Einrichtungen nach Anspruch 3, dadurch gekennzeichnet, daß die Portionen von einheitlicher Größe sind.

5. Einrichtung nach Anspruch 3, dadurch gekennzeichnet, daß die Portionen von unterschiedlicher Größe sind.

6. Einrichtung nach wenigstens einem der vorhergehenden Ansprüche, dadurch gekennzeichnet, daß an den die einzelnen Portionen enthaltenden Beuteln wenigstens eine Einrichtung zur Erleichterung ihrer Handhabung (41) angebracht ist.

7. Einrichtung nach wenigstens einem oder vorhergehenden Ansprüche, dadurch gekennzeichnet, daß eine die Adsorptionsmittel oder Absorptionsmittel enthaltende Kammer in Form einer herausnehmbaren Kartusche (10) ausgebildet ist.

8. Einrichtung nach wenigstens einem der vorhergehenden Ansprüche, dadurch gekennzeichnet, daß ein Gehäuseteil mit einer die Adsorptionsmittel oder Absorptionsmittel enthaltenden Kammer zu einer abnehmbaren Patrone zusammengebaut ist.

9. Einrichtung nach wenigstens einem der vorhergehenden Ansprüche, dadurch gekennzeichnet, daß eine Begrenzung der die Adsorptionsmittel oder Absorptionsmittel enthaltenden Kammer durch den Boden eines Gehäuseteils (33) gebildet wird und daß dieser Boden in einen mit dem Auslaß (36) verbundenen Durchbruch (40) mündende, zum Innern der Kammer hin offene Kanäle (39) aufweist.

Fig.1

Fig. 2

Fig. 3

Fig. 4

SCHNITT II—II